Europäisches Patentamt

European Patent Office

Office européen des brevets

(11) Publication number: **0 040 284**
A1

# (12) EUROPEAN PATENT APPLICATION

(21) Application number: **80830065.1**

(22) Date of filing: **07.08.80**

(51) Int. Cl.³: **H 02 G 3/28**
**A 47 B 17/00**

(30) Priority: **19.05.80 IT 4042780**

(43) Date of publication of application:
**25.11.81 Bulletin 81/47**

(84) Designated Contracting States:
**AT BE CH DE FR GB LI LU NL SE**

(71) Applicant: **Andolfi, Renato**
**Via Cimarosa, 37**
**I-80127 Napoli(IT)**

(72) Inventor: **Andolfi, Renato**
**Via Cimarosa, 37**
**I-80127 Napoli(IT)**

(74) Representative: **Fontana, Sergio**
**Via G.Calderini, 19**
**I-00196 Roma(IT)**

(54) Arrangement for running electrical and/or telephone cables to individual users apparatus in work rooms.

(57) Arrangement consisting of strips (13) ilaced to cover floor (P) of a room (L), with channels (7) inserted to accomod te electrical and/or telephone cables (18) and close with covers (9). At the same end of the channels (7), a transverse channel (15) is installed to receive said cables from a branch box (14) in a corner of the room. A floorboard (1) under each work table (4) above an area of channel (7) receives in its cavity cables (18) from an opening (10) in replacement cover (9') which pass through an opening in the surface of the floorboard (1) to be connected to multiple outlet turret (5) located on the surface of the floorboard (1). A tube (11) inside or outside table (4) carries the wires to the equipment on it (T,C).

Table (4') may be pre-equipped with floorboard (1'), turret (5') and passage (19).

The combination of the rug, floorboard and table on pre-existing floors prevents any hazard in the passages between tables while preserving esthetics, and also allows any arrangements with no difficulty in connections.

FIG.1

EP 0 040 284 A1

<u>Arrangement for the connection of electrical and/or</u>
<u>telephone cables to individual users, run from the</u>
<u>floor.</u>

This invention concerns an arrangement for the con=
nection of electrical and/or telephone cables to
supply work tables, run from the floor.

Electrical and/or telephone cables are usually sup=
plied to work tables by installing outlets in the
walls, or multiple outlet turrets in the floor,
from which free cables then carry current to the
equipment on the table. However, this solution is
sufficiently advantageous only when effected during
the construction phase. In already built loca =
tions, it requires significant modifications, as it
also does in case tables must be moved from their
original placement. Moreover, the free cables, as
well as the turrets emerging from the floor, obstruct
the areas between tables and give rise to problems
of esthetics and safety.

The aim of this invention is thus to avoid the pro=
blems mentioned above by arranging the electrical and/or telephone cables, the electrical outlets and the multiple outlet turrets in such way that, especially in old constructions, esthetics are pre served, pre-existing floors must not be removed, no safety problems arise from obstructed areas between tables, and the tables may be freely plac ed in any desired arrangement with no difficulty in hooking up the resulting new connections.

This invention solves this problem by placing elec trical and/or telephone cables in prefabricated channels to be disposed on the floor and intercalat ed with strips of a rug, said channels being pro = vided with covers with a suitable opening through which the cables extracted from a channel are pass= ed to supply the individual users apparatus, said covered channels and said strips appearing as a continuous rug.

According to this invention, the rug strips may be realized in hard rubber or even in other cheap ma= terials like pressed felt, thread or hemp, provided they have the same thickness as the channels. These strips as well as the channel covers may be lined with moquette for esthetical purposes.

According to this invention, the electrical and.or telephone cables or principal cables are made to join in a single point in the room: a box from which branch cables proceed within a transverse channels toward individual longitudinal channels and thus toward the area where each work table is located.

According to this invention, beneath each work table is a suitable floorboard shaped so that there is a free space between its lower side and the rug. The free space between said floorboard and the surface of the rug underneath allows for the cables to be arranged by drawing them out of the channels, as will be described below. On the upper side of the floorboard are one or more multiple outlet turrets for supplying current to tha apparatus on the table. Moreover, the surface of said floorboard has one or more openings corresponding to the ends of the table through which the cables are passed to con = nect to the multiple outlet turrets.

As shown by the above discussion, each table may occupy any position with respect to any of the can= nels, provided that at least one area of the floor= board covers a sufficient area of longitudinal chan nel to allow passage of the cables.

To bring out the cables which run from the channel to the turret of each work table, the channel co = ver in the area of the desired is removed and re = placed with a cover equipped with a suitable open= ing through which the cables extracted from the .

channel are passed. The channel covers, as well as the substitute covers with the opening for the ca = bles, are applied to the channel using a known sys= tem; for example with stops inserted under pressure in gaskets glued to the sides of the channel and next to its edges. Naturally, screws or analogous and equivalent devices may be used instead of the stops. Said covers may also be covered with a la = yer of surface finishing analogous to that of the rug.

Finally, the apparatus on the table is in its turn connected to the turret on the floorboard by plug = ging in the lines. These lines may be left free or be passed through a tube fixed laterally to the ta= ble, on the inside or outside.

As a variation of this invention, the tables may be equipped at the manufacturer's with said floorboard, which may be an integral part of them, as well as the the one or more multiple outlet turrets described above and the internal passage in the table opening directly on the top of the floorboard through which the cables are passed.

For already built tables, floorboards are used of a size and shape suitable to the work tables themsel= ves. Supplying current to work tables in already existing locations does not require modifications to the floor, since it is sufficient to use a rug as described above to arrange all the cables bran = ching from a single point in the room represented by the box.

The benefits arising from the arrangement according to this invention thus safety the aims set for it. In fact, from only one branch point, electrical and/ or telephone cables can be arranged in any type of room  with no modifications, while preserving the esthetics and eliminating at the same time hazards due to obstructed passages between work tables. Moreover, these may be moved into practically any position with no difficulty in the necessary elec = trical connections.

The object of this invention is illustrated here with reference to a preferred embodiment represen = ted in the attached non-limiting, exemplifying de = signs.

Figure 1 shows a partially sectioned front view of a work table equipped with a floorboard according to this invention, placed on a rug according to this invention.

Figure 2 shows a side view of a  work table as in figure 1.

Figure 3 shows a plan of a room in which work tables are placed in different positions with respect to the channels of the rug.

Figure 4 shows a transverse section according to line A - A' of figure 3 of one of the channels pla= ced between two strips of the rug, particularly the cables and the points where the cover is fixed.

Figure 5 shows a transverse section according to line A - A' of figure 3, in which the cover of fi = gure 4 has been replaced with one with an opening for the cables.

Figure 6 shows a frontal view of a table pre-equip= ped with a floorboard plus the internal passage.

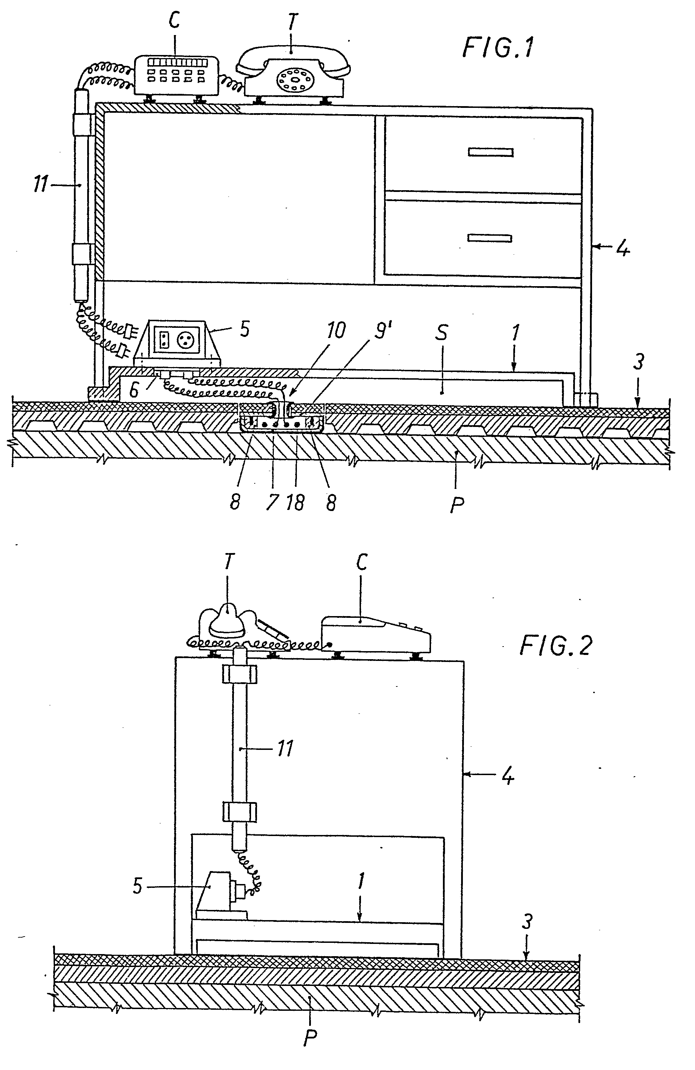

In figure 1, the floorboard according to this inven tion has been generically indicated with 1. Its bottom side forms a free space S with the surface of the rug 3 underneath, spread along the floor P. A work table 4 is placed on rug 3 which carries a te= lephone T and calculator C. On the top side of the floorboard there is a multiple outlet turret 5 un = der which is opening 6 for the passage of the ca = bles in space S beneath the floorboard. The cables in turn come from channel 7. Corresponding to the internal walls of channel 7 are gaskets 8 on which cover 9' is placed and to which it is fixed.

Cover 9' has an opening 10 for the cables to pass.
Note that along one side of table 4 a tube 11 is ar
ranged for the passage of the wires from apparatus
T and C to turret 5.

Figure 2 shows a side view of the same arrangement
in figure 1.

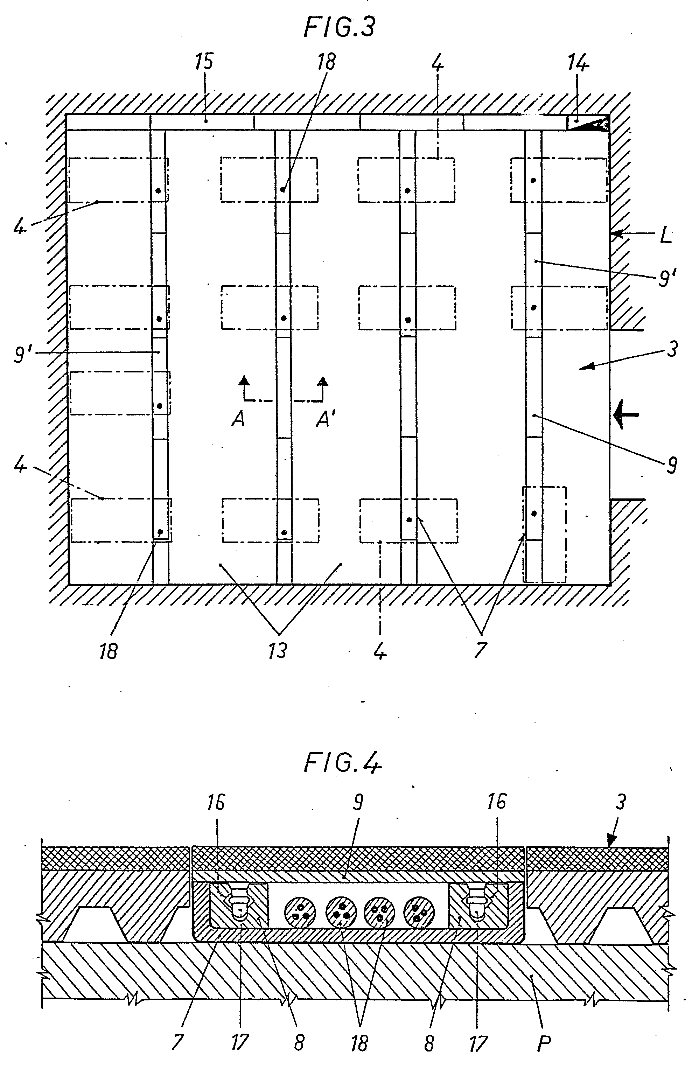

In figure 3, the room in which thirteen work tables
4 are placed in various positions is indicated ge =
nerically with L.  The strips forming rug 3 accor =
ding to this  invention are indicated with 13 and
the channels with 7.  Note how even when placed in
different positions the  tables are always arran =
ged in an area over one of the channels.  A branch
box 14 is located in one corner of room L.  The
electrical and/or telephone cables from this box
are passed through the conduit formed by transverse
channel 15 up to longitudinal channels 7.

In figure 4, according to a line A - A' in figure 3,
a section of rug 3 lain on floor P and of a chan =
nel 7 is illustrated.  Inside channel 7 note the ga
skets 8 with a groove 16 shaped to fit stops 17 (in
this case, pressure pins) of cover 9.  The cover of
this section of channel 7 is closed.  Note the ca =
bles 18 inside the  channel.

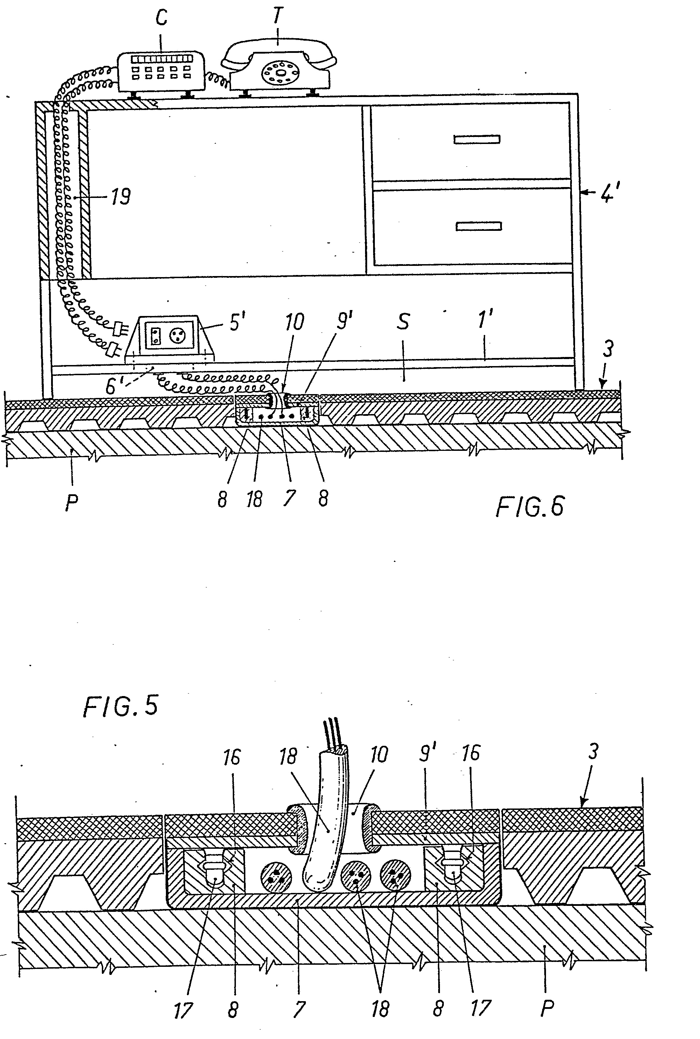

In figure 5, cover 9 of figure 4 has been replaced
by cover 9' equipped with an opening for cables 18

to pass.

Finally, figure 6 illustrates a work table variation 4', pre-equipped at the manufacturer's with floor = board 1', according to this invention, with opening 6', multiple outlet turret 5' and internal passage 19.

The wires for the apparatus on the work table are connected as follows:

Strips 13 of rug 3 are lain in room L with longitu= dinal channels 7 inserted and connected at one end by transverse channel 15 (figure 3). Cables are drawn from branch box 14 along channel 15 and chan= nels 7. Near the area of the rug on which work ta = ble 4, or 4', stands with its floorboard, cover 9 of the channel is removed (figure 4)and replaced with cover 9' (figure 5) with an opening 10 for the passage of cables 18? These cables are passed through said opening 10 and connected with multiple outlet turret 5, or 5', located on floorboard 1, or 1'. Finally, the wires are plugged in at this tur= ret which runs through tube 11, or passage 19, to apparatus T and C on the work table.

The object of this invention has been described and illustrated with reference to a preferred form. Na= turally there may be variations in arrangement, size and proportions without going beyond the bounds of this invention.

Claims

1. Arrangement for the connection of electrical and/
or telephone cables to supply individual users appa=
ratus in locations and especially to supply work ta=
bles , run from the floor, wherein electrical and/or
telephone cables (18) are placed in pre-fabricated
channels (7) to be disposed on the floor (P) and in=
tercalated with strips of a rug, said channels being
provided with covers equipped with a suitable opening
through which the cables extracted from a channel are
passed to supply individual users apparatus, said
covered channels and said strips appearing as a con=
tinuous rug.

2. Arrangement according to claim 1, wherein the
rug strips (13) are realized in hard rubber or even
in other cheap materials, like for example pressed
felt, thread or hemp, provided said strips (13) have
the same thickness as the channels (7, 15).

3. Arrangement according to claim 1, wherein at least
one end of each channel (7) is able to be joint to
a transversal channel (15) for accomodating cables
(18) to be conducted to the branch box (14) of the
room (L).

4. Arrangement according to claims 1 to 3, wherein

the covers (9, 9') are fixed to the channels (7) by means of stops (17) inserted under pressure in ga= skets (8) placed on the lateral walls of the channels (7).

5. Arrangement according to chatever claim 1 to 4, wherein the covers (9') with openings (10) for ac= comodating cables (18) can be substituted by closed covers (9).

6. Arrangement according to whatever claim 1 to 5, with at least one work table, wherein the work table (4) is provided with one multiple outlet turret (5) for the joining of cables (18) deriving from the correspondent channel (7) with the users apparatus (C, T).

7. Arrangement according to the precedent claims, wherein on a rug (3) a hollow floorboard (1) is plac ed for supplying electrical and/or telephone lines to work tables for use in both rooms under construc tion and pre-existing ones, wherein its shape depends on the particular work table, it forms with the area of rug (3) underneath a free space (S) to accomodate the cables (18) from the channel (7), and it is pro= vided with an opening (6) for the passage of cables (18) directly to the multiple outlet turret (5).

8. Arrangement according to claim 6, wherein the turret (5) is fixed on a hollow floorboard (1) of the work table (4), said hollow floorboard (1) forming a free space (S) with the surface of the rug underneath for the passage of the cables (18) from the channel (7) to the turret (5).

9. Arrangement according to whatever claim 1 to 5, wherein at least one work table (4') is foreseen pre-equipped at the manufacturer's with suitable separate floorboard (1'), or a piece of it, with an opening (6'), one or more multiple outlet turrets (5') and a passage (19) for passing and connecting the electrical and/or telephone cables from rug (3).

FIG.1

FIG.2

FIG.3

FIG.4

C    T

19

4'

5'    10    9'    S    1'

3

6'

P    8  18  7  8

*FIG.6*

*FIG.5*

16    18    10    9'    16    3

17    8    7    18    8    17    P

# EUROPEAN SEARCH REPORT

**European Patent Office**

## DOCUMENTS CONSIDERED TO BE RELEVANT

| Category | Citation of document with indication, where appropriate, of relevant passages | Relevant to claim |
|---|---|---|
| | US - A - 3 818 659 (ANDERSON) <br> * Column 1, lines 19-21, 27-35, 67; column 2, lines 1-12; figures 1,2 * | 1,2,5 |
| | -- | |
| | CH -. A - 577 757 (WOERTZ) <br> * Column 1, lines 1-7; column 2, lines 58-63; column 3, lines 26-35 * | 1,5 |
| | -- | |
| | DE - A - 2 905 182 (KNOLL) <br> * Page 9, last paragraph; page 10, paragraph 1; figures 1,2 * <br> & GB - A - 2 017 798 | 1,6 |
| | -- | |
| | GB - B - 286 090 (REAH) <br> * Page 2, lines 77-102; figures 1,2 * | 1,3 |
| | -- | |
| | US - E - 28 756 (FORK) <br> * Column 3, lines 31-39; column 6, lines 41-55; figure 10 * | 1,4,5 |
| | -- | |
| | US - A - 3 000 682 (LOEW) <br> * Column 1, line 55 to column 2, line 62; figures 1,2 * | 1,6 |
| | -- | |
| | ./. | |

### CLASSIFICATION OF THE APPLICATION (Int. Cl.³)

H 02 G 3/28
A 47 B 17/00

### TECHNICAL FIELDS SEARCHED (Int. Cl.³)

H 02 G 3/18
3/28
A 47 B 17/00
E 04 F 15/02

### CATEGORY OF CITED DOCUMENTS

X: particularly relevant
A: technological background
O: non-written disclosure
P: intermediate document
T: theory or principle underlying the invention
E: conflicting application
D: document cited in the application
L: citation for other reasons

&: member of the same patent family, corresponding document

The present search report has been drawn up for all claims

| Place of search | Date of completion of the search | Examiner |
|---|---|---|
| The Hague | 13-02-1981 | TIELEMANS |

EPO Form 1503.1 06.78

European Patent
Office

**EUROPEAN SEARCH REPORT**

| Category | Citation of document with indication, where appropriate, of relevant passages | Relevant to claim | CLASSIFICATION OF THE APPLICATION (Int. Cl. 3) |
|---|---|---|---|
| | DE - A - 2 120 078 (BROCKER)<br><br>* Page 5, last paragraph; figure 1 * | 1,7-9 | |

**DOCUMENTS CONSIDERED TO BE RELEVANT**

TECHNICAL FIELDS SEARCHED (Int. Cl. 3)